# EUROPEAN PATENT SPECIFICATION

(11) **EP 4 291 011 B1**
(45) Date of publication and mention of the grant of the patent: **02.12.2026**
(21) Application number: 22704955.8
(22) Date of filing: 02.02.2022
(51) Int. Cl.: A01B 69/04, A01B 69/08, G05D 1/00

(54) **VEHICLE FOR AGRICULTURAL USE WITH A FRONT AND REAR STEERING AXLE**
FAHRZEUG ZUR LANDWIRTSCHAFTLICHEN NUTZUNG MIT EINER VORDER- UND HINTERACHSE
VÉHICULE À USAGE AGRICOLE AYANT UN ESSIEU DIRECTEUR AVANT ET UN ESSIEU DIRECTEUR ARRIÈRE

(30) Priority: 12.02.2021 IT 202100003170
(43) Date of publication of application: 20.12.2023
(73) Proprietor: Same Deutz-Fahr Italia S.p.A., 24047 Treviglio (Bergamo) (IT)
(72) Inventor: RIBALDONE, Massimo, 24047 Treviglio, Bergamo (IT); TREMOLADA, Simone, 24047 Treviglio, Bergamo (IT); BURRONI, Emanuele, 24047 Treviglio, Bergamo (IT); GATTI, Mario, 24047 Treviglio, Bergamo (IT); BOLOGNESI, Andrea, 24047 Treviglio, Bergamo (IT)
(74) Representative: Gamba, Alessandro
(86) International application number: PCT/IB2022/050903
(87) International publication number: WO 2022/172133

(56) References cited:
- US-A1- 2016 057 921
- US-A1- 2018 093 708

## Description

The subject of this invention is a vehicle for agricultural use, preferably in the embodiment wherein the vehicle for agricultural use is a "utility tractor." A further subject of this invention is a method for managing the trajectory of the aforesaid vehicle for agricultural use.

In the following description, the term "vehicle for agricultural use" refers both to agricultural tractors and, more generally, to earthmoving machines derived from agricultural tractors. Generally, "tractor" refers to large-sized vehicles generally specific for the execution of power actions, and "utility tractors" refers to smaller-sized vehicles, typically suitable to operate between rows of vines or fruit trees; typically, "utility tractors" are also known as "specialized tractors."

The term "wheel assembly" refers to all types of wheels, without any limitation to the type of tire and rim, whether single or twin.

Furthermore, in this discussion, the term "work plane" means the plane on which the vehicle for agricultural use moves and preferably performs specific operations by means of members and accessories specifically provided on the vehicle.

In the prior art - e.g. US 2018/093708 A1 and US 2016/057921 A1 - vehicles for agricultural use are known which are suitable to move and possibly perform specific operations on flat ground planes, but also on inclined ground planes.

With particular reference to activities on inclined ground planes, it has been noted that the problem of maintaining the pre-established trajectory is particularly acute: vehicles for agricultural use, in effect, tend to suffer undesirable side drifts due to the inclination of the work plane. In order to overcome this problem, the driver must continuously correct the steering angle of the vehicle (both at the front and possibly at the rear) to compensate for said lateral drifts.

This problem is further exacerbated in the not infrequent circumstance wherein the inclined work plane T has a variable inclination.

It is the object of this invention to provide a vehicle for agricultural use and a method for managing the trajectory of said vehicle wherein this problem is overcome.

Said object is achieved by a vehicle for agricultural use made according to claim 1. Additionally, this object is achieved by a trajectory management method according to claim 11. The claims dependent on these claims describe further preferred embodiments.

The features and advantages of the vehicle for agricultural use according to this invention will appear more clearly from the following description, made by way of non-limiting example with reference to the appended figures, wherein:
- Fig. 1 is a perspective view of a vehicle for agricultural use that is the subject of this invention according to a preferred embodiment in which it is a utility tractor, wherein said vehicle for agricultural use is shown in motion on an inclined work plane;

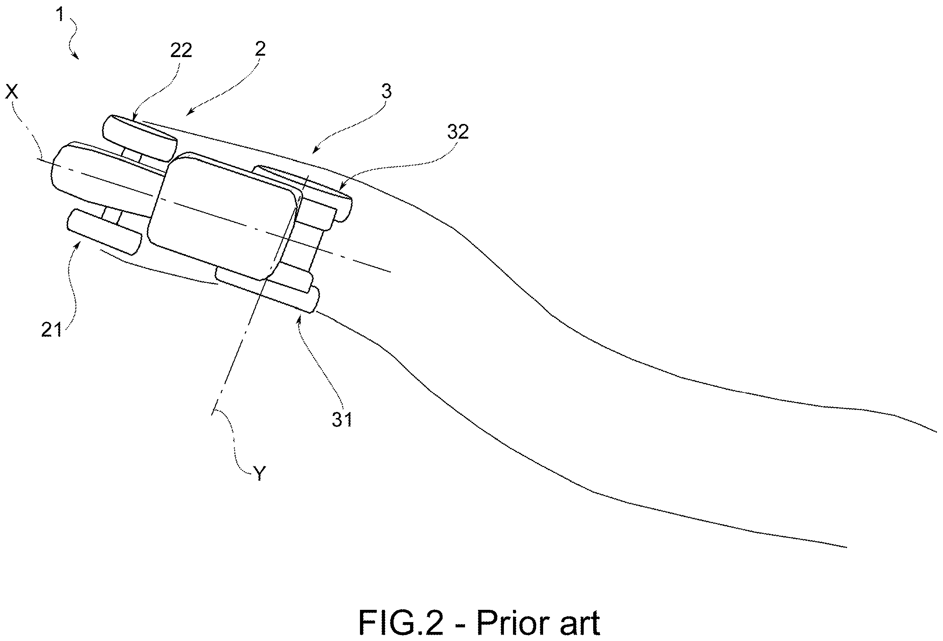

- Fig. 2 is a top view of a vehicle for agricultural use, moving on an inclined work plane, which, according to the state of the art, moves along a trajectory subject to modifications by the driver;

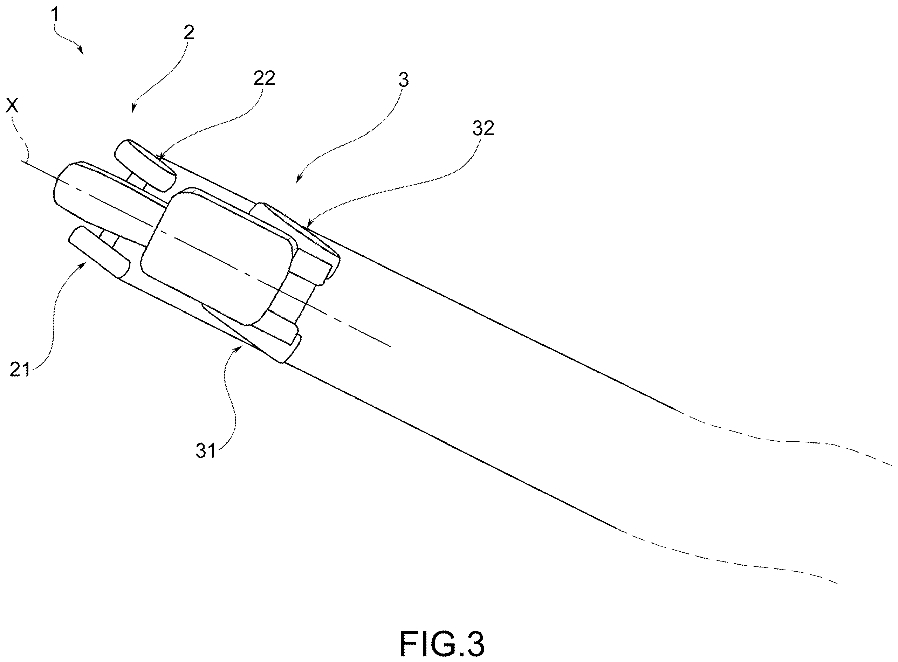

- Fig. 3 is a top view of a vehicle for agricultural use, in motion on an inclined work plane, which, according to this invention, moves along a proper trajectory;

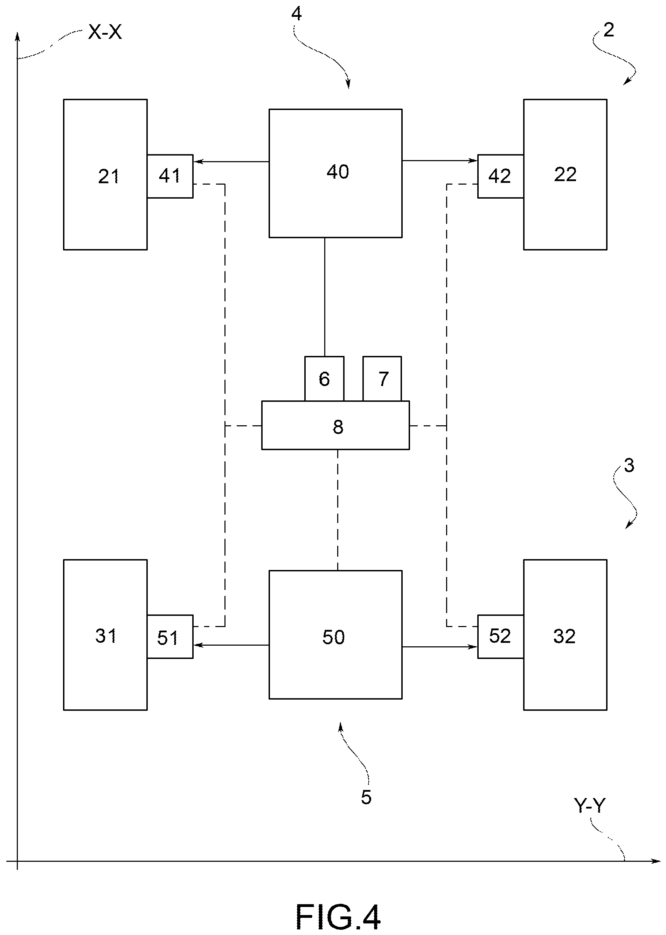

- Fig. 4 is a schematic of the vehicle for agricultural use that is the subject of this invention according to a preferred embodiment;
- Fig. 5 is an illustrative diagram of a map for the management of the vehicle trajectory, and in particular of the rear steering angle.

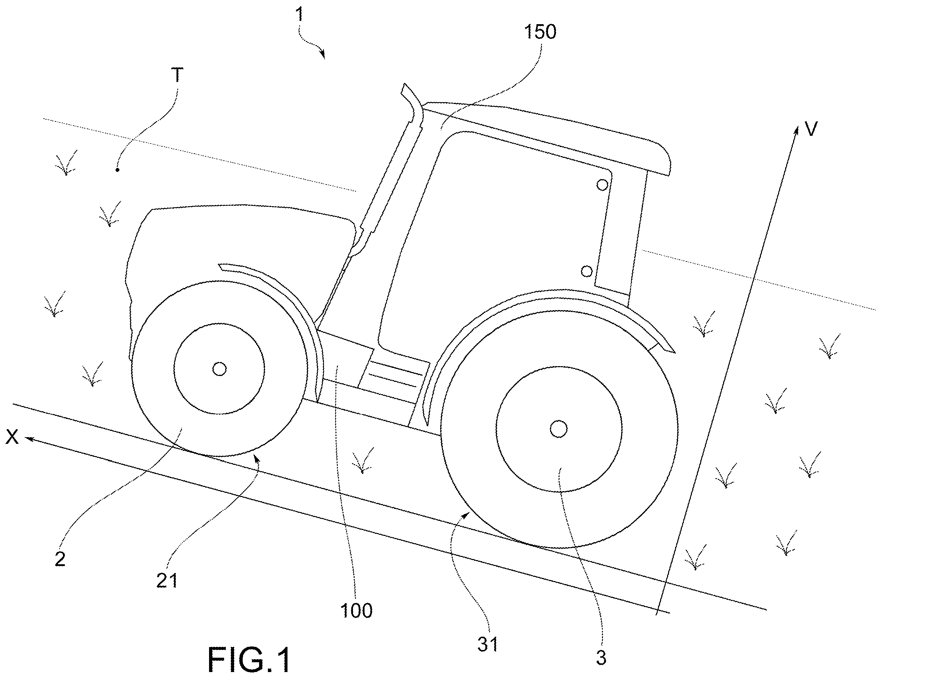

According to the appended figures, 1 has been used to indicate a vehicle for agricultural use in its entirety. In a preferred embodiment, such as that shown in Fig. 1, the vehicle for agricultural use is a utility tractor.

The vehicle 1 has a longitudinal axis X-X along the straight direction of travel, a transverse axis Y-Y perpendicular to the longitudinal axis X-X, and a vertical axis V-V perpendicular to the longitudinal axis X-X and the transverse axis Y-V. The vehicle 1 extends in height along said vertical axis V-V. The vertical axis V-V is therefore the axis orthogonal to the working plane on which the vehicle 1 operates.

The vehicle 1 comprises a plurality of axles having extension along the transverse axis Y-Y. Specifically, the vehicle 1 comprises a front steering axle 2 and a rear steering axle 3, which are spaced apart longitudinally.

According to this invention, the front steering axle 2 comprises two front wheel assemblies 21, 22.

Preferably, the front steering axle 2 is tractive.

According to this invention, the vehicle 1 further comprises front steering control means 4 operatively connected to the front steering axle 2.

The front steering control means 4 are suitable to control the front steering angle of the front wheel assemblies 21, 22.

Preferably, the front steering control means 4 are hydraulic.

In addition, the front steering control means 4 comprise a front steering angle sensor device 40 suitable to detect the front steering angle of the front wheel assemblies 21, 22.

According to this invention, the rear steering axle 3 comprises two rear wheel assemblies 31, 32.

Preferably, the rear steering axle 3 is tractive.

Further, according to this invention, the vehicle comprises rear steering control means 5 operatively connected to the rear steering axle 3.

The rear steering control means 5 are suitable to control the rear steering angle of the rear wheel assemblies 31, 32.

According to a preferred embodiment, the rear steering control means 5 comprise a rear steering angle sensor device 50 suitable to detect the rear steering angle of the rear wheel assemblies 31, 32.

Preferably, the rear steering control means 5 are hydraulic.

According to a preferred embodiment, each wheel assembly comprises a steering angle sensor device. In other words, the front steering angle sensor device 40 comprises two front sensor elements 41, 42 each for each front wheel assembly 21, 22. Additionally, the rear steering angle sensor device 50 comprises two rear sensor elements 51, 52 each for each rear wheel assembly 31, 32.

According to this invention in a first embodiment, the vehicle comprises an inertial detection assembly 6 suitable to detect the attitude of the vehicle.

According to this embodiment, the inertial detection assembly 6 is suitable to detect at least the accelerations and angular speeds with respect to the longitudinal axis X-X and with respect to the transverse axis Y-Y. Preferably, the inertial detection assembly 6 is suitable to detect at least the accelerations along the longitudinal axis X-X and along the transverse axis Y-Y. Preferably, the inertial detection assembly 6 is suitable to detect angular velocities about the longitudinal axis X-X and about the transverse axis Y-Y.

Preferably, the inertial detection assembly 6 comprises a pair of unidirectional accelerometers positioned parallel to the longitudinal axis X-X and parallel to the transverse axis Y-Y, respectively.

Moreover, preferably, the inertial detection assembly 6 also detects accelerations and angular speeds of the vehicle with respect to the longitudinal axis X-X, the transverse axis Y-Y, and the vertical axis V-V. For example, the inertial detection assembly 6 comprises a third unidirectional accelerometer. Preferably, the inertial detection assembly 6 is suitable to detect at least the accelerations along the longitudinal axis X-X, along the transverse axis Y-Y, and along the vertical axis V-V. Preferably, the inertial detection assembly 6 is suitable to detect the angular speeds about the longitudinal axis X-X, about the transverse axis Y-Y, and about the vertical axis V-V.

According to a preferred embodiment, the inertial detection assembly 6 comprises at least one gyroscope and preferably comprises two gyroscopes.

According to a preferred embodiment, the inertial detection assembly 6 comprises a GPS detector.

According to this invention, in said first preferred embodiment, the vehicle 1 comprises a control unit 8 operatively connected to the front steering control means 4, the rear steering control means 5, and the detection assembly 6.

According to this invention, in said first preferred embodiment, the control unit 8 is suitable to control the rear steering control means 5 and thus the rear steering angle, as a function of that which is detected by the front steering angle sensor device 40 and the detection assembly 6. In other words, the control unit 8 is configured to control the rear steering control means 5 and thus the rear steering angle, as a function of that which is detected by the front steering angle sensor device 40 and the detection assembly 6.

Preferably, the control unit 8 is suitable to receive and operate also as a function of that which is detected by the rear steering sensors 50.

Further, according to a preferred embodiment, the vehicle 1 comprises a speed detection assembly 7 suitable to detect the speed of the vehicle.

Preferably, the control unit 8 is operatively connected to the speed detection assembly 7 in such a way that it controls the rear steering control means 5 as a function of the detected vehicle speed.

According to a preferred embodiment, the speed detection assembly 7 comprises a detection device of the absolute speed of the vehicle.

According to a preferred embodiment, the speed detection assembly 7 comprises specific wheel speed detection elements. In particular, the rotation speed of each wheel assembly is thus detected.

According to this invention in a second embodiment, the vehicle comprises an inertial detection assembly 6 and a speed detection assembly 7 suitable to detect the attitude of the vehicle.

In contrast to the first embodiment, the inertial detection assembly 6 is suitable to detect at least the accelerations along the transverse axis Y-Y. Simultaneously, the speed detection assembly 7 detects the vehicle speed.

Preferably, the inertial detection assembly 6 comprises a unidirectional accelerometer positioned parallel to the transverse axis Y-Y.

The presence of other accelerometers, gyroscopes, and/or GPS devices is optional in this embodiment.

According to this invention, in said second preferred embodiment, the vehicle 1 comprises a control unit 8 operatively connected to the front steering control means 4, the rear steering control means 5, the detection assembly 6, and the speed detection assembly 7.

According to this invention, in said second preferred embodiment, the control unit 8 is suitable to control the rear steering control means 5, and thus the rear steering angle, as a function of that which is detected by the front steering angle sensor device 40 according to both that which is detected by the detection assembly 6 and that which is detected by the speed detection assembly 7.

That is to say, in said second embodiment of the invention, the control unit 8 receiving information relating to the front steering angle, relating to the vehicle speed, and relating to the accelerations along the transverse axis Y-Y, processes said information in such a way as to identify the kinematics of the vehicle and thus determine the components of accelerations also along the longitudinal axis X-X, in such a way as to control the steering angle and thus set the desired trajectory.

The other features described with respect to the first embodiment of the invention are also provided in said second embodiment.

According to a preferred embodiment, the control unit 8 is suitable to control the hydraulic action at the rear steering axle 3 by controlling the angular position of the rear wheel assemblies 31, 32.

According to a preferred embodiment, the control unit 8 in effect comprises a hydraulic pump 80 fluidly connected to the rear steering control means 5.

According to a preferred embodiment, the front wheel assemblies 21, 22 are independent, i.e., they are positionable at different steering angles from each other.

According to a preferred embodiment, the rear wheel assemblies 31, 32 are independent, i.e., they are positionable at different steering angles from each other.

According to a preferred embodiment, the vehicle 1 comprises a base frame 100 to which the front steering axle 2 and the rear steering axle 3 are operatively connected.

Further, preferably, the vehicle 1 comprises a driving cab 150 habitable by the driver of the vehicle.

According to a preferred embodiment, the driving cab 150 is engaged to the base frame 100 comprising damping members adapted to damp the transmission vibrations from the base frame 100 to the driving cab 150.

Preferably, said damping members comprise silent blocks.

Preferably, the inertial detection assembly 6 is accommodated onboard said driving cab 150.

The subject of this invention is also a method for managing the trajectory of a vehicle for agricultural use 1 in motion on an inclined work plane T, wherein the vehicle for agricultural use 1 has the features described above.

In particular, said trajectory management method relates to an embodiment of this invention according to the first embodiment, comprising the steps of:
- detecting the front steering angle of the front wheel assemblies 21, 22 by means of the front steering angle sensor device 40;
- detecting the accelerations and angular speeds of the vehicle with respect to the longitudinal axis X-X and with respect to-the transverse axis Y-Y by means of the inertial detection assembly 6;
- controlling the rear steering control means 5 by means of the control unit 8 by automatically setting the rear steering angle of the rear wheel assemblies 31, 32, as a function of that which is detected by means of the front steering angle sensor device 40 and by means of the inertial detection assembly 6.

In a preferred embodiment, the trajectory management method also comprises the steps of:
- detecting the rear steering angle of the rear wheel assemblies 31, 32 by means of the rear steering angle sensor device 50;
- controlling the rear steering control means 5 by means of the control unit 8 as a function of that which is detected by the rear steering angle sensor device 50.

According to this preferred embodiment, the management method of the trajectory further comprises the steps of:
- detecting the speed of the vehicle 1 by means of the speed detection assembly 7;
- controlling the rear steering control means 5 by means of the control unit 8 as a function of that which is detected by the speed detection assembly 7.

In particular, said trajectory management method relates to an embodiment of this invention according to the second embodiment, comprising the steps of:
- detecting the front steering angle of the front wheel assemblies 21, 22 by means of the front steering angle sensor device 40;
- detecting the accelerations and angular speeds of the vehicle along the transverse axis Y-Y by means of the inertial detection assembly 6;
- detecting the speed of the vehicle by means of the speed detection assembly 7;
- controlling the rear steering control means 5 by means of the control unit 8, automatically setting the rear steering angle of the rear wheel assemblies 31, 32 as a function of that which is detected by means of the front steering angle sensor device 40, by means of the inertial detection assembly 6, and by means of the speed detection assembly **7.**

According to a preferred embodiment, the trajectory management method also comprises the steps of:
- detecting the rear steering angle of the rear wheel assemblies 31, 32 by means of the rear steering angle sensor device 50;
- controlling the rear steering control means 5 by means of the control unit 8 as a function of that which is detected by the rear steering angle sensor device 50.

According to a preferred embodiment, the control unit 8 is adapted to receive data collected by the above-described components and, processing such information, sets the rear steering angle in such a way as to maintain the desired trajectory.

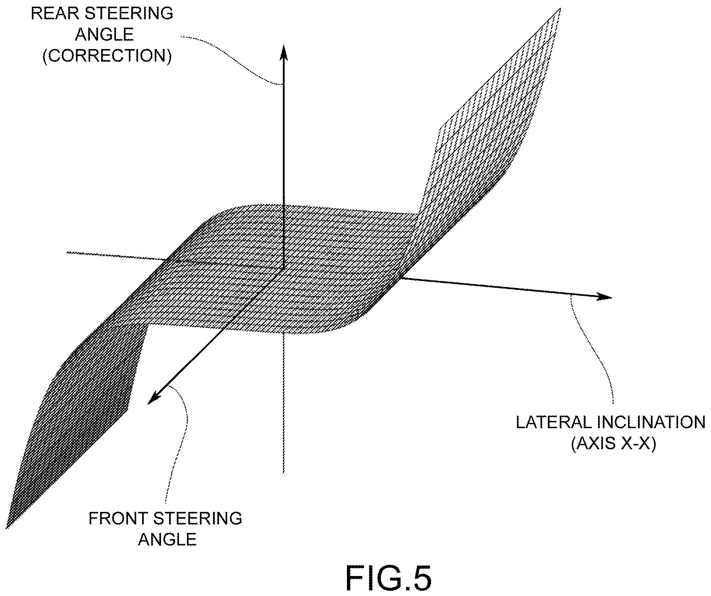

Specifically, specific maps are loaded into the control unit 8, such as the one shown by way of example in Fig. 5, by which specific input values, i.e., as a function of the values of the front steering angle and the lateral inclination of the vehicle, correspond to a value of the rear steering angle.

According to the first described embodiment, the value of the lateral inclination of the vehicle is obtained by means of the inertial detection assembly 6, which detects the accelerations along the longitudinal axis X-X and along the transverse axis Y-Y.

According to the second described embodiment, the value of the lateral inclination of the vehicle is obtained by means of the inertial detection assembly 6, which detects the accelerations along the transverse axis Y-Y, and by means of the speed detection group 7.

Preferably, said control unit 8 operates continuously over time. In other words, the control unit 8 constantly reprocesses the data and information detected and operates continuously i.e., not in a time-discretized manner, for example at preset intervals.

Preferably, the control unit 8 controls the change of the rear steering angle with a speed such as to avoid "jerking" or undesirable abrupt trajectory changes so as to result in undesirable jolts for the driver.

According to a preferred embodiment, upon a change in the inclination of the inclined work plane T, the control unit 8 reacts abruptly by changing the rear steering angle.

According to a preferred embodiment, the vehicle has the main controller and a specific controller specially provided to house the control unit 8. Said specific controller is operatively connected to the vehicle controller.

According to another preferred embodiment, the vehicle has the main controller, and the control unit 8 is housed on said main controller.

According to a preferred embodiment, a plurality of maps, each relating to specific operating conditions, are stored on the control unit 8.

In effect, in particular, a variety of maps, each a function of different operating conditions, are provided, for example as a function of specific ground conditions, or specific environmental conditions, or specifics as a function of the presence of certain working accessories on the vehicle.

Preferably, operator control means are also provided by which the user modifies a selected map to adjust it as needed.

Innovatively, the vehicle for agricultural use and the method for managing the trajectory of a vehicle for agricultural use of this invention enable the achievement of the object set forth in the invention.

Advantageously, the vehicle for agricultural use is suitable to deal with an inclined work plane T avoiding side drifts.

Advantageously, the vehicle for agricultural use is suitable to move along an inclined work plane T in the trajectory set by the driver on the front axle.

Advantageously, the driver does not have to worry about the steering angle of the rear axle, concentrating only on driving, and on the direction to be set on the front wheels.

Advantageously, the vehicle has movements with reduced creep, and therefore the vehicle has low tire wear, i.e., lower tire wear than vehicle solutions that do not manage the rear steering angle automatically.

Advantageously, the vehicle handles any lateral drifts autonomously, limiting them to the point of preventing them.

Advantageously, the vehicle is safer from potential rollover situations.

Advantageously, the vehicle offers improved traction.

Advantageously, the vehicle offers a high level of driving comfort.

Advantageously, work planes with varying inclinations are handleable effectively: the change of inclination of a work plane is managed independently without causing difficulties for the driver.

Advantageously, the vehicle has exceptional maneuverability in tight and steep spaces.

Advantageously, the inertial detection assembly is positioned on the vehicle in a position where it is protected, and therefore not affected, by vibration.

Advantageously, the inertial detection assembly is positioned on the vehicle in a safe position in which it is protected from the elements and in which it is sheltered from possible impacts.

Advantageously, the inertial detection assembly is positioned on the vehicle in a position proximal to the driver, so that it operates with the aim of making driving as comfortable as possible.

It is clear that a person skilled in the art, in order to meet contingent needs, could make modifications to the vehicle or trajectory management method, all of which are contained within the scope of protection defined by the following claims.

## Claims

1. A vehicle (1) for agricultural use, comprising a longitudinal axis (X-X), a transverse axis (Y-Y) and a vertical axis (V-V), comprising:
- a front steering axle (2) comprising two front wheel assemblies (21, 22);
- front steering control means (4) operatively connected to the front steering axle (2), suitable to control the front steering angle of the front wheel assemblies (21, 22), wherein said front steering control means (4) comprise a front steering angle sensor device (40) suitable to detect the front steering angle of the front wheel assemblies (21, 22);
- a rear steering axle (3) comprising two rear wheel assemblies (31, 32);
- rear steering control means (5) operatively connected to the rear steering axle (3), suitable to control the rear steering angle of the rear wheel assemblies (31, 32), wherein the rear steering control means (5) comprise a rear steering angle sensor device (50) suitable to detect the rear steering angle of the rear wheel assemblies (31, 32);
- an inertial detection assembly (6) suitable to detect the accelerations of the vehicle along the longitudinal axis (X-X) and along the transverse axis (Y-Y) and suitable to detect the angular speeds of the vehicle around the longitudinal axis (X-X) and around the transverse axis (Y-Y);
- a speed detection assembly (7) suitable to detect the speed of the vehicle (1);
- a control unit (8) operatively connected to the front steering control means (4), the rear steering control means (5), the inertial detection assembly (6) and to the speed detection assembly (7); wherein the vehicle (1) is **characterized by** the fact that the control unit (8) is configured to control the rear steering control means (5), and thus the rear steering angle, as a function of the detection performed by the front steering angle sensor device (40), the rear steering angle sensor device (50), and the inertial detection assembly (6).

2. The vehicle (1) for agricultural use according to claim 1, wherein the inertial detection assembly (6) comprises a pair of unidirectional accelerometers positioned parallel to the longitudinal axis (X-X) and parallel to the transverse axis (Y-Y), respectively.

3. The vehicle (1) for agricultural use according to any of the preceding claims, wherein the inertial detection assembly (6) is also suitable to detect the accelerations along the vertical axis (V-V) and to detect angular speeds of the vehicle around the vertical axis (V-V).

4. The vehicle (1) for agricultural use according to any one of the previous claims, wherein the inertial detection assembly (6) comprises a unidirectional accelerometer positioned parallel to the transverse axis (Y-Y), respectively.

5. The vehicle (1) for agricultural use according to any of the preceding claims, wherein the inertial detection assembly (6) comprises at least one gyroscope and/or comprises a GPS detector.

6. The vehicle (1) for agricultural use according to any of the preceding claims, wherein the front steering control means (4) and the rear steering control means (5) are hydraulic.

7. The vehicle (1) for agricultural use according to any of the preceding claims, wherein each steering angle sensor device comprises a sensor element for each respective wheel assembly.

8. The vehicle (1) for agricultural use according to any of the preceding claims, comprising:
i) a base frame (100) to which the front steering axle (2) and the rear steering axle (3) are operatively connected; and
ii) a driving cab (150) habitable by the user of the vehicle, wherein the inertial detection assembly (6) is accommodated onboard said driving cab (150).

9. The vehicle (1) for agricultural use according to claim 8, wherein the driving cab (150) is engaged with the base frame (100) comprising damping members, for example a silent block, suitable to damp the transmission of vibrations from the base frame (100) to the driving cab (150).

10. The vehicle (1) for agricultural use according to any of the preceding claims, wherein said vehicle (1) for agricultural use is a utility tractor.

11. A method for managing the trajectory of a vehicle (1) for agricultural use moving on an inclined work plane (T), wherein the vehicle (1) for agricultural use is according to any of the previous claims, wherein the trajectory management method comprises the steps of:
- detecting the front steering angle of the front wheel assemblies (21, 22) by means of the front steering angle sensor device (40);
- detecting the accelerations of the vehicle along the longitudinal axis (X-X) and along the transverse axis (Y-Y) by means of the inertial detection assembly (6) and detecting the angular speeds of the vehicle around the longitudinal axis (X-X) and around the transverse axis (Y-Y) by means of the inertial detection assembly (6);
- detecting the speed of the vehicle by means of the speed detection assembly (7);
- controlling the rear steering control means (5) by means of the control unit (8) by automatically setting the rear steering angle of the rear wheel assemblies (31, 32) as a function of the detection performed by the front steering angle sensor device (40), the inertial detection assembly (6) and the speed detection assembly (7).

## Patentansprüche

1. Fahrzeug (1) zur landwirtschaftlichen Nutzung, umfassend eine Längsachse (X-X), eine Querachse (Y-Y) und eine Vertikalachse (V-V), umfassend:
- eine vordere Lenkachse (2), die zwei Vorderradanordnungen (21, 22) umfasst;
- Frontlenkungs-Steuermittel (4), die operativ mit der vorderen Lenkachse (2) verbunden sind und dazu geeignet sind, den Vorderlenkwinkel der Vorderradanordnungen (21, 22) zu steuern, wobei die Frontlenkungs-Steuermittel (4) eine Vorderlenkwinkel-Sensorvorrichtung (40) umfassen, die dazu geeignet ist, den Vorderlenkwinkel der Vorderradanordnungen (21, 22) zu erfassen;
- eine hintere Lenkachse (3), die zwei Hinterradanordnungen (31, 32) umfasst;
- Hecklenkungs-Steuermittel (5), die operativ mit der hinteren Lenkachse (3) verbunden sind und dazu geeignet sind, den Hinterlenkwinkel der Hinterradanordnungen (31, 32) zu steuern, wobei die Hecklenkungs-Steuermittel (5) eine Hinterlenkwinkel-Sensorvorrichtung (50) umfassen, die dazu geeignet ist, den Hinterlenkwinkel der Hinterradanordnungen (31, 32) zu erfassen;
- eine Trägheitserfassungsanordnung (6), die dazu geeignet ist, die Beschleunigungen des Fahrzeugs entlang der Längsachse (X-X) und entlang der Querachse (Y-Y) zu erfassen, und dazu geeignet ist, die Winkelgeschwindigkeiten des Fahrzeugs um die Längsachse (X-X) und um die Querachse (Y-Y) zu erfassen;
- eine Geschwindigkeitserfassungsanordnung (7), die dazu geeignet ist, die Geschwindigkeit des Fahrzeugs (1) zu erfassen;
- eine Steuereinheit (8), die operativ mit den Frontlenkungs-Steuermitteln (4), den Hecklenkungs-Steuermitteln (5), der Trägheitserfassungsanordnung (6) und mit der Geschwindigkeitserfassungsanordnung (7) verbunden ist; wobei das Fahrzeug (1) **dadurch gekennzeichnet ist, dass** die Steuereinheit (8) dazu konfiguriert ist, die Hecklenkungs-Steuermittel (5) und somit den Hinterlenkwinkel in Abhängigkeit von der durch die Vorderlenkwinkel-Sensorvorrichtung (40), die Hinterlenkwinkel-Sensorvorrichtung (50) und die Trägheitserfassungsanordnung (6) durchgeführten Erfassung zu steuern.

2. Fahrzeug (1) zur landwirtschaftlichen Nutzung nach Anspruch 1, wobei die Trägheitserfassungsanordnung (6) ein Paar unidirektionaler Beschleunigungsmesser umfasst, die parallel zur Längsachse (X-X) bzw. parallel zur Querachse (Y-Y) positioniert sind.

3. Fahrzeug (1) zur landwirtschaftlichen Nutzung nach einem der vorhergehenden Ansprüche, wobei die Trägheitserfassungsanordnung (6) zudem dazu geeignet ist, die Beschleunigungen entlang der Vertikalachse (V-V) zu erfassen und Winkelgeschwindigkeiten des Fahrzeugs um die Vertikalachse (V-V) zu erfassen.

4. Fahrzeug (1) zur landwirtschaftlichen Nutzung nach einem der vorhergehenden Ansprüche, wobei die Trägheitserfassungsanordnung (6) einen unidirektionalen Beschleunigungsmesser umfasst, der jeweils parallel zur Querachse (Y-Y) positioniert ist.

5. Fahrzeug (1) zur landwirtschaftlichen Nutzung nach einem der vorhergehenden Ansprüche, wobei die Trägheitserfassungsanordnung (6) mindestens ein Gyroskop umfasst und/oder einen GPS-Detektor umfasst.

6. Fahrzeug (1) zur landwirtschaftlichen Nutzung nach einem der vorhergehenden Ansprüche, wobei die Frontlenkungs-Steuermittel (4) und die Hecklenkungs-Steuermittel (5) hydraulisch sind.

7. Fahrzeug (1) zur landwirtschaftlichen Nutzung nach einem der vorhergehenden Ansprüche, wobei jede Lenkwinkel-Sensorvorrichtung ein Sensorelement für jede jeweilige Radanordnung umfasst.

8. Fahrzeug (1) zur landwirtschaftlichen Nutzung nach einem der vorhergehenden Ansprüche, umfassend:
i) einen Grundrahmen (100), mit dem die vordere Lenkachse (2) und die hintere Lenkachse (3) operativ verbunden sind; und
ii) eine Fahrerkabine (150), die vom Benutzer des Fahrzeugs bewohnbar ist, wobei die Trägheitserfassungsanordnung (6) an Bord der Fahrerkabine (150) untergebracht ist.

9. Fahrzeug (1) zur landwirtschaftlichen Nutzung nach Anspruch 8, wobei die Fahrerkabine (150) mit dem Grundrahmen (100) unter Verwendung von Dämpfungselementen, beispielsweise einem Silentblock, in Eingriff steht, die dazu geeignet sind, die Übertragung von Vibrationen vom Grundrahmen (100) auf die Fahrerkabine (150) zu dämpfen.

10. Fahrzeug (1) zur landwirtschaftlichen Nutzung nach einem der vorhergehenden Ansprüche, wobei das Fahrzeug (1) zur landwirtschaftlichen Nutzung ein Nutztraktor ist.

11. Verfahren zum Leiten der Bewegungsbahn eines Fahrzeugs (1) zur landwirtschaftlichen Nutzung, das sich auf einer geneigten Arbeitsebene (T) bewegt, wobei das Fahrzeug (1) zur landwirtschaftlichen Nutzung nach einem der vorhergehenden Ansprüche beschaffen ist, wobei das Bewegungsbahnleitungsverfahren die Schritte umfasst:
- Erfassen des Vorderlenkwinkels der Vorderradanordnungen (21, 22) mittels der Vorderlenkwinkel-Sensorvorrichtung (40);
- Erfassen der Beschleunigungen des Fahrzeugs entlang der Längsachse (X-X) und entlang der Querachse (Y-Y) mittels der Trägheitserfassungsanordnung (6) und Erfassen der Winkelgeschwindigkeiten des Fahrzeugs um die Längsachse (X-X) und um die Querachse (Y-Y) mittels der Trägheitserfassungsanordnung (6);
- Erfassen der Geschwindigkeit des Fahrzeugs mittels der Geschwindigkeitserfassungsanordnung (7);
- Steuern der Hecklenkungs-Steuermittel (5) mittels der Steuereinheit (8) durch automatisches Einstellen des Hinterlenkwinkels der Hinterradanordnungen (31, 32) in Abhängigkeit von der durch die Vorderlenkwinkel-Sensorvorrichtung (40), die Trägheitserfassungsanordnung (6) und die Geschwindigkeitserfassungsanordnung (7) durchgeführten Erfassung.

## Revendications

1. Véhicule (1) à usage agricole, comprenant un axe longitudinal (X-X), un axe transversal (Y-Y) et un axe vertical (V-V), comprenant :
- un essieu directeur avant (2) comprenant deux ensembles de roues avant (21, 22) ;
- des moyens de commande de direction avant (4) reliés de manière opérationnelle à l'essieu directeur avant (2), aptes à commander l'angle de braquage avant des ensembles de roues avant (21, 22), dans lequel lesdits moyens de commande de direction avant (4) comprennent un dispositif capteur d'angle de braquage avant (40) apte à détecter l'angle de braquage avant des ensembles de roues avant (21, 22) ;
- un essieu directeur arrière (3) comprenant deux ensembles de roues arrière (31, 32) ;
- des moyens de commande de direction arrière (5) reliés de manière opérationnelle à l'essieu directeur arrière (3), aptes à commander l'angle de braquage arrière des ensembles de roues arrière (31, 32), dans lequel les moyens de commande de direction arrière (5) comprennent un dispositif capteur d'angle de braquage arrière (50) apte à détecter l'angle de braquage arrière des ensembles de roues arrière (31, 32) ;
- un ensemble de détection inertielle (6) apte à détecter les accélérations du véhicule le long de l'axe longitudinal (X-X) et le long de l'axe transversal (Y-Y) et apte à détecter les vitesses angulaires du véhicule autour de l'axe longitudinal (X-X) et autour de l'axe transversal (Y-Y) ;
- un ensemble de détection de vitesse (7) apte à détecter la vitesse du véhicule (1) ;
- une unité de commande (8) reliée de manière opérationnelle aux moyens de commande de direction avant (4), aux moyens de commande de direction arrière (5), à l'ensemble de détection inertielle (6) et à l'ensemble de détection de vitesse (7) ; dans lequel le véhicule (1) est **caractérisé par le fait que** l'unité de commande (8) est configurée pour commander les moyens de commande de direction arrière (5), et ainsi l'angle de braquage arrière, en fonction de la détection effectuée par le dispositif capteur d'angle de braquage avant (40), le dispositif capteur d'angle de braquage arrière (50) et l'ensemble de détection inertielle (6).

2. Véhicule (1) à usage agricole selon la revendication 1, dans lequel l'ensemble de détection inertielle (6) comprend une paire d'accéléromètres unidirectionnels positionnés parallèlement à l'axe longitudinal (X-X) et parallèlement à l'axe transversal (Y-Y), respectivement.

3. Véhicule (1) à usage agricole selon l'une quelconque des revendications précédentes, dans lequel l'ensemble de détection inertielle (6) est également apte à détecter les accélérations le long de l'axe vertical (V-V) et à détecter les vitesses angulaires du véhicule autour de l'axe vertical (V-V).

4. Véhicule (1) à usage agricole selon l'une quelconque des revendications précédentes, dans lequel l'ensemble de détection inertielle (6) comprend un accéléromètre unidirectionnel positionné parallèlement à l'axe transversal (Y-Y), respectivement.

5. Véhicule (1) à usage agricole selon l'une quelconque des revendications précédentes, dans lequel l'ensemble de détection inertielle (6) comprend au moins un gyroscope et/ou comprend un détecteur GPS.

6. Véhicule (1) à usage agricole selon l'une quelconque des revendications précédentes, dans lequel les moyens de commande de direction avant (4) et les moyens de commande de direction arrière (5) sont hydrauliques.

7. Véhicule (1) à usage agricole selon l'une quelconque des revendications précédentes, dans lequel chaque dispositif capteur d'angle de braquage comprend un élément capteur pour chaque ensemble de roues respectif.

8. Véhicule (1) à usage agricole selon l'une quelconque des revendications précédentes, comprenant :
i) un châssis de base (100) auquel l'essieu directeur avant (2) et l'essieu directeur arrière (3) sont reliés de manière opérationnelle ; et
ii) une cabine de conduite (150) habitables par l'utilisateur du véhicule, dans lequel l'ensemble de détection inertielle (6) est logé à bord de ladite cabine de conduite (150).

9. Véhicule (1) à usage agricole selon la revendication 8, dans lequel la cabine de conduite (150) est engagée avec le châssis de base (100) comprenant des éléments d'amortissement, par exemple un silentbloc, aptes à amortir la transmission de vibrations depuis le châssis de base (100) vers la cabine de conduite (150).

10. Véhicule (1) à usage agricole selon l'une quelconque des revendications précédentes, dans lequel ledit véhicule (1) à usage agricole est un tracteur utilitaire.

11. Procédé de gestion de la trajectoire d'un véhicule (1) à usage agricole se déplaçant sur un plan de travail incliné (T), dans lequel le véhicule (1) à usage agricole est selon l'une quelconque des revendications précédentes, le procédé de gestion de trajectoire comprenant les étapes de :
- détection de l'angle de braquage avant des ensembles de roues avant (21, 22) au moyen du dispositif capteur d'angle de braquage avant (40) ;
- détection des accélérations du véhicule le long de l'axe longitudinal (X-X) et le long de l'axe transversal (Y-Y) au moyen de l'ensemble de détection inertielle (6) et détection des vitesses angulaires du véhicule autour de l'axe longitudinal (X-X) et autour de l'axe transversal (Y-Y) au moyen de l'ensemble de détection inertielle (6) ;
- détection de la vitesse du véhicule au moyen de l'ensemble de détection de vitesse (7) ;
- commande des moyens de commande de direction arrière (5) au moyen de l'unité de commande (8) en réglant automatiquement l'angle de braquage arrière des ensembles de roues arrière (31, 32) en fonction de la détection effectuée par le dispositif capteur d'angle de braquage avant (40), l'ensemble de détection inertielle (6) et l'ensemble de détection de vitesse (7).
